# EUROPEAN PATENT APPLICATION

(11) **EP 2 042 764 A1**
(43) Date of publication of application: **01.04.2009**
(21) Application number: 07742674.0
(22) Date of filing: 27.04.2007
(51) Int. Cl.: F16D 3/224, F16D 3/223

(54) **CONSTANT VELOCITY UNIVERSAL JOINT**

(30) Priority: 19.07.2006 JP 2006196321
(71) Applicant: NTN Corporation, Osaka-shi, Osaka 550-0003 (JP)
(72) Inventor: YOSHIDA, Kazuhiko, Iwata-shi Shizuoka 438-0037 (JP); KOBAYASHI, Masazumi, Iwata-shi Shizuoka 438-0037 (JP); AZUMA, Kazuhiro, Iwata-shi Shizuoka 438-0037 (JP)
(74) Representative: Grünecker, Kinkeldey, Stockmair & Schwanhäusser Anwaltssozietät
(86) International application number: PCT/JP2007/059239
(87) International publication number: WO 2008/010340

(57) **Abstract**

The present invention provides a compact constant velocity universal joint having high strength, and superior operability and durability. In the constant velocity universal joint of the present invention, an offset angle ⌀_{T} formed by a center of curvature O_{T0} of a guiding groove 2b of an outer component 2, an intersecting point Q between a joint plane P and a PCD, and a center of curvature O_{T1} of a guiding groove 3b of an inner component 3 is set to 11.0°5≤⌀_{T}≤15.0°.

## Description

### TECHNICAL FIELD

The present invention relates to a constant velocity universal joint used in a power transmission system in automobiles and various industrial machineries. In particular, the present invention relates to a so-called fixed constant velocity universal joint that does not slide (plunge) in an axial direction, among constant velocity universal joints that can always perform torque transmission smoothly regardless of an angle (operating angle) between a rotational axis on a driving side and a rotational axis on a driven side.

### BACKGROUND ART

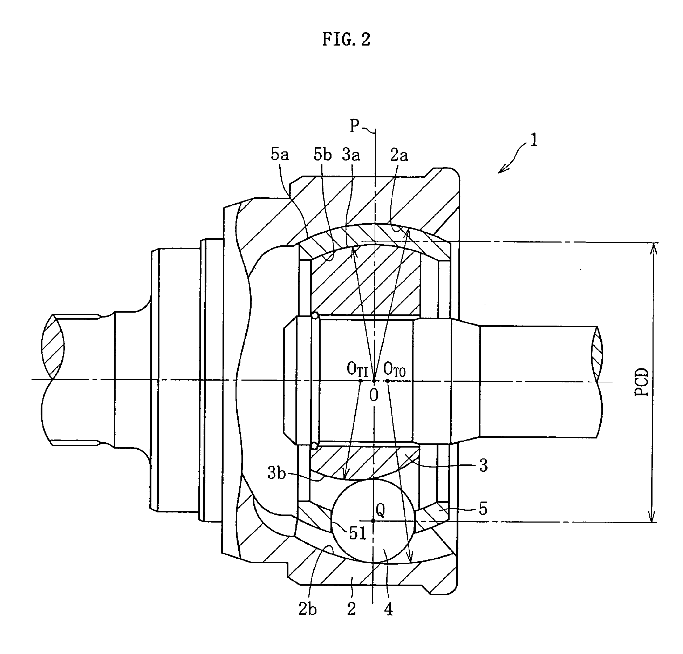

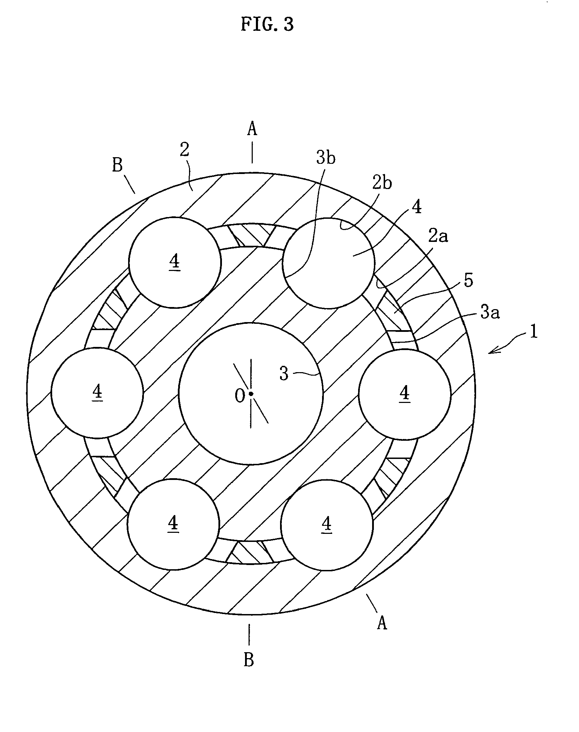

As shown in Fig. 2 and Fig. 3, a BJ (ball fixed joint) used in a drive shaft of an automobile and the like includes an outer member 2, an inner member 3, torque transmitting balls 4, and a cage 5. The cage 5 is interposed between the outer member 2 and the inner member 3. The cage 5 is in spherical surface-contact with each of a spherical inner circumferential surface 2a of the outer member 2 and a spherical outer circumferential surface 3a of the inner member 3 (refer to, for example, Patent Document 1, Japanese Patent Laid-Open Publication No. Heisei 8-128454).

A plurality of curved guiding grooves 2b and 3b are respectively formed on the inner circumferential surface 2a of the outer member 2 and the outer circumferential surface 3a of the inner member 3. Center of curvatures O_{T0} and O_{T1} of the guiding grooves 2b and 3b of the outer member 2 and the inner member 3 are respectively at symmetrical positions to a joint center O (same as a spherical surface center of the spherical inner circumferential surface 2a of the outer member and the spherical outer circumferential surface 3a of the inner member). In other words, the center of curvature O_{T0} and the center of curvature O_{T1} are offset in an axial direction by equal distances in opposite directions from the joint center O. Therefore, a ball track formed by a guiding groove 2b of the outer member 2 and a guiding groove 3b of the inner member 3 is wedge-shaped, gradually widening from one axial direction towards the other. Each torque transmitting ball 4 is housed within this wedge-shaped ball track and load is transmitted between the outer member 2 and the inner member 3. The cage 5 is assembled to hold all torque transmitting balls 4 on a joint plane P (a plane perpendicular to a bisecting line of an operating angle).

Because the guiding grooves 2b and 3b are offset, when the torque transmitting balls 4 transmit load, axial force works on each torque transmitting ball 4. As a result, the torque 1transmitting balls 4 try to fly out in a direction in which the guiding grooves 2b and 3b open, namely the direction in which the above-described wedge-shaped track space widens. In accompaniment, the axial force also works on the cage 5. The cage 5 is firmly pressed against the spherical inner circumferential surface 2a of the outer member 2 and the spherical outer circumferential surface 3a of the inner member 3.
Patent Document 1: Japanese Patent Laid-Open Publication No. Heisei 8-128454

### DISCLOSURE OF THE INVENTION

### PROBLEMS TO BE SOLVED BY THE INVENTION

Because the guiding grooves 2b and 3b are offset as described above, depths of both guiding grooves are not equal in an axial direction. Therefore, when the torque transmitting balls 4 transmit a high load at an area in which the guiding groove is shallow (at a large operating angle), a contact ellipse caused by contact with the torque transmitting balls 4 becomes large. The contact ellipse rides upwards onto a guiding groove shoulder at which stress is concentrated. There is risk of a chip being formed in the shoulder section. As a countermeasure, reduction of surface pressure by increasing a diameter of the torque transmitting balls 4 and a pitch circle diameter (PCD) can be considered. However, a problem occurs in that an outer diameter of the outer member 2 increases and the constant velocity universal joint becomes larger.

Therefore, an object of the present invention is to provide a compact constant velocity universal joint that has high strength, and superior operability and durability.

### MEANS FOR SOLVING THE PROBLEMS

To achieve the above-described object, in the present invention, an offset angle of a ball track is set to 11.0° to 15.0°.

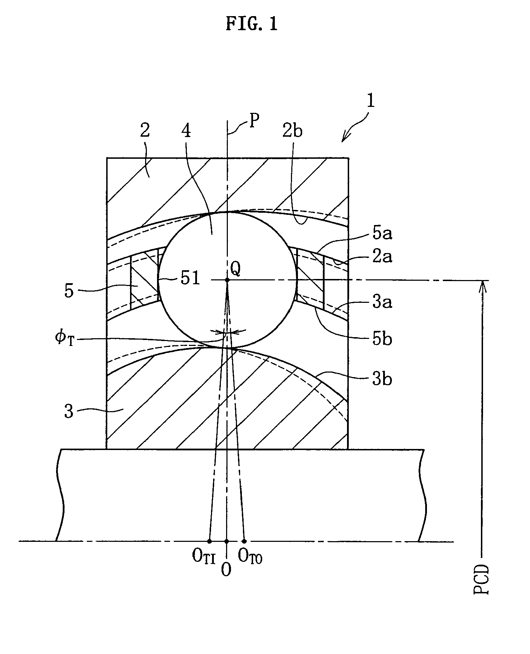

Here, as shown in Fig. 1, an offset angle ø_{T} is a ∠O_{T0}QO_{T1} formed by a center of curvature O_{T0} of a guiding groove 2b of an outer component 2, an intersecting point Q between a joint plane P and a PCD, and a center of curvature O_{T1} of a guiding groove 3b of an inner component 3. Conventionally, the offset angle ø_{T} is set to about 16.0° to 17.0°. However, in the present invention, the offset angle ø_{T} is smaller, in other words, 11.0°≤ø_{T}≤15.0°.

When the offset angle ø_{T} is small, as shown in Fig. 1, depths of guiding grooves 2b and 3b become closer to being uniform in the axial direction than that of a conventional product (guiding grooves of the conventional product are indicated by dashed lines). In this case, because a groove depth at a shallow area of the guiding grooves becomes deeper than that of the conventional product, a contact ellipse does not easily ride upwards onto a guiding groove shoulder section even under a high load. Chipping of the shoulder section and the like can be prevented. Increased strength and improved durability of the guiding grooves can be achieved. Moreover, because a thickness of a cage can be thickened, increased strength and increased life of the cage can be achieved. Fig. 1 shows when the groove depth of the guiding grooves 2b and 3b at its most shallow area is taken to a same degree as that of the conventional product. In this case, the thickness of the cage can be made significantly thicker than that of a conventional cage (indicated by dashed lines). Therefore, a size increase of the constant velocity universal joint can be prevented. Improvement in load capacity and durability life of an overall joint can be achieved.

On the other hand, when the offset angle is too small, durability and strength may deteriorate. Alternatively, a problem may occur regarding operability.

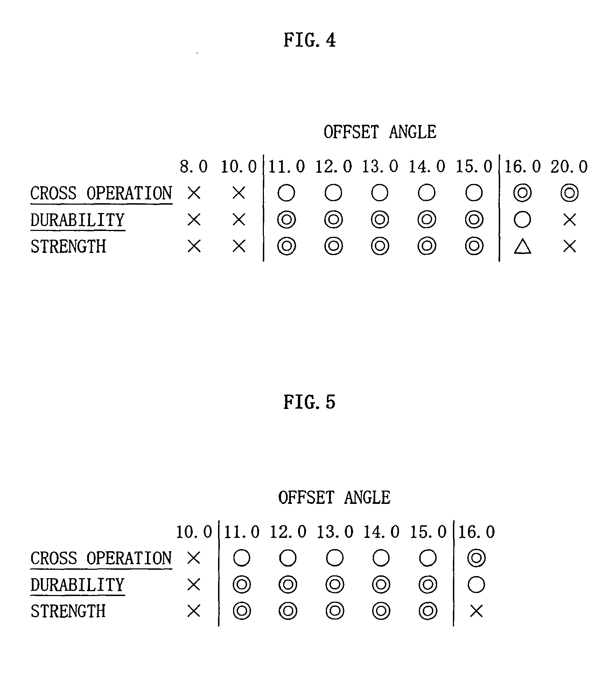

Therefore, to determine a preferable offset angle ø_{T} range, tests for comparing cross operation, durability, and quasi-static torsional strength of a BJ were performed. The cross operation was evaluated by whether locking occurs when a shaft is bent to a maximum operating angle on a plane including opposing ball tracks in no load state, and subsequently bent on a plane perpendicular to the plane. Durability was evaluated under a load torque of 834N·m (85kgf·m), a rotational frequency of 230rpm, and an operating angle of 6°. Quasi-static torsional strength was evaluated under an operating angle of 40°, a rotational frequency of 2.5rpm, and a load torque increase rate of 0.05kN·m/rev. Test results are shown in Fig. 4. In Fig. 4, an × indicates a "problem ", a Δ indicates "deterioration",○ indicates "normal", and a ⊚ indicates "good" (same applies to the explanations below).

From Fig. 4, it can be understood that, when the offset angle is smaller than 11 °, a problem occurs in all cross operation, durability, and quasi-static torsional strength. When the offset angle is larger than 15.0°, durability and strength deteriorate. Therefore, to simultaneously satisfy operability, durability, and strength of the constant velocity universal joint, the offset angle ø_{T} is preferably set to 11.0° or more and 15.0° or less.

Regarding a UJ (undercut-free joint) as well, tests for comparing cross operation, durability, and quasi-static torsional strength were similarly performed. Aside from the quasi-static torsional strength test being performed at an operating angle of 50°, the tests are the same as those for the BJ. An offset angle ø_{C} of the cage is set to 1.8°.

Test results are shown in Fig. 5. From Fig. 5, it is determined that, in the UJ as well, when the offset angle ø_{T} of the ball track is set to 11.0° or more and 15.0° or less, operability, durability, and quasi-static torsional strength of the constant velocity universal joint can be simultaneously satisfied.

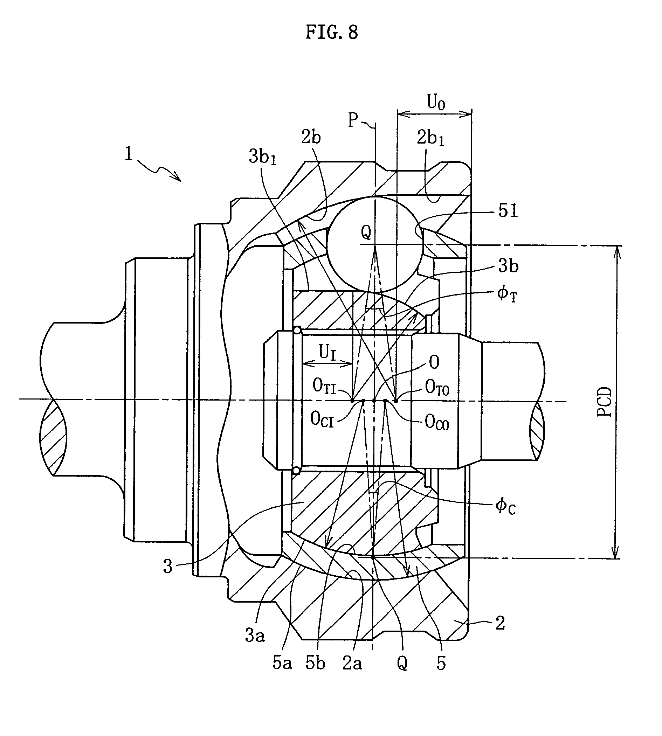

The offset angle ø_{C} of the cage in the UJ is preferably greater than 0° and 3.0° or less. An offset angle ø_{C} exceeding 0° is required to ensure allowable operating angle and strength of the cage. On the other hand, when ø_{C} exceeds 3.0°, heat generation significantly increases. Depth of the ball tracks decrease, causing a decline in life. Here, as shown in Fig. 8, the offset angle ø_{C} of the cage indicates a ∠O_{C0}QO_{C1} formed by a spherical surface center O_{C0} of an outer circumferential surface 5a of a cage 5, an intersecting point Q between a joint plane P and a PCD, and a spherical surface center O_{C1} of an inner circumferential surface 5b of the cage 5. The spherical surface center O_{C0} and the spherical surface center O_{C1} are offset in the axial direction by equal distances in opposite directions from the joint center O. An offset amount is less than the offset amount of the spherical surface centers O_{T0} and O_{T0} of the ball track.

The outer component is ordinarily manufactured by being heat treated (high frequency quenching and the like) after forging (for example, cold forging), and a finishing processing (grinding and the like) being further performed to achieve predetermined dimensions. In the present invention, because durability of the cage 5 can be improved in a manner such as that described above, it is thought that no particular problems will occur regarding durability of an overall joint, even when the finishing processing, such as grinding, is omitted on any one of a spherical inner circumferential surface 2a and the guiding grooves 2b of the outer component 2 and the spherical inner circumferential surface 2a or the guiding grooves 2b is used as is with a forged surface (forging texture).

To demonstrate the above, a comparative test regarding an effect on durability the presence of grinding on the inner circumferential section of the outer component has was performed. Following results were obtained.

**[Table 1]**

| | Durability |
|---|---|
| Comparative Example 1 (grinding performed) | ○ |
| Comparative Example 2 (no grinding performed) | Δ |
| Invention 1 (ø_{T} =11.0°) | ⊚ |
| Invention 2 (ø_{T} = 15.0°) | ⊚ |

As is made clear by Table 1, in the Inventions 1 and 2 in which the offset angles ø_{T} of the ball track are 11.0° and 15.0° and the grinding of the inner circumferential section (both the spherical inner circumferential surface 2a and the guiding grooves 2b) of the outer component 2 is omitted, an increase in durability can be seen compared to Comparative Examples 1 and 2 in which the offset angle ø_{T} is 16.0° (grinding is performed on the inner circumferential section of the Comparative Example 1, and grinding is not performed on the inner circumferential section of the Comparative Example 2). Therefore, when the offset angle ø_{T} is set to the above-described range, the grinding of the inner circumferential section (at least one of either the spherical inner circumferential surface 2a or the guiding grooves 2b) of the outer component 2 can be omitted. Cost reduction can be achieved as a result of simplification of processing operations.

When the offset angle ø_{T} of the ball track is large, a force (axial force) by which the torque transmitting ball 4 tries to fly outward in a direction in which the above-described wedge-shaped track space widens increases. Noise (slapping noise) of the torque transmitting balls 4 striking the cage 5, the ball tracks, and the like becomes louder. Conventionally, the torque transmitting balls 4 are pressed into pockets 51 of the cage 5 and a negative gap being formed therebetween. The torque transmitting balls 4 are held on the joint plane P with certainty, thereby reducing the slapping noise. However, when the torque transmitting balls are pressed within, because the torque transmitting balls 4 move within the pockets 51 of the cage 5 in a pre-loaded state, heat generation and wear of the cage 5 occur. Because bending resistance of the constant velocity universal joint increases, bending becomes difficult to perform manually Effort may be required to be made when the constant velocity universal joint is assembled onto a vehicle and the like.

On the other hand, when the offset angle ø_{T} is smaller than that of the conventional product, the axial force weakens. It is thought that interference between the pockets and the torque transmitting balls 4 can be a positive gap.

Table 2 is a study of a relationship between size of the offset angle ø_{T} and whether the slapping noise occurs. As is made clear from the results, the slapping noise occurs in a Comparative Example having the same offset angle ø_{T} as the conventional product (ø_{T} = 16. 0°). However, in the Inventions 1 to 3 of which the offset angle ø_{T} is 11. 0°, 13. 0°, or 15. 0°, the slapping noise cannot be recognized (the interference is a positive gap in all Comparative Example and Inventions).

**[Table 2]**

| | Slapping Noise |
|---|---|
| Comparative Example | × |
| Invention 1 (ø_{T} =11.0°) | ○ |
| Invention 2 (ø_{T} =13.0°) | ○ |
| Invention 3 (ø_{T} =15.0°) | ○ |

In this way, as a result of the offset angle ø_{T} being set within the above-described range, the interference between the pockets and the torque transmitting balls can be a positive gap while preventing the occurrence of the slapping noise. Therefore, heat generation and wear of the cage can be prevented, and durability can be improved. In addition, the bending resistance of the constant velocity universal joint can be reduced, and facilitation of assembly can be improved.

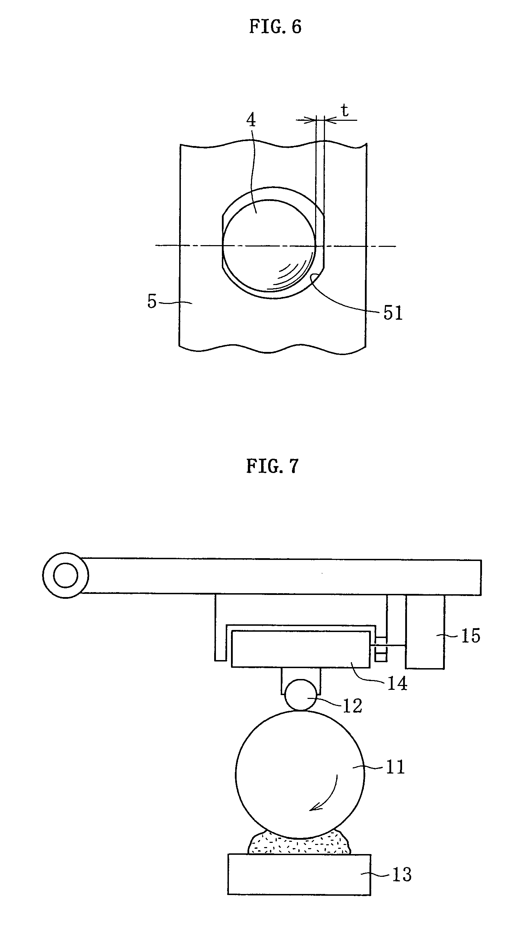

The positive gap described here refers to a gap in the axial direction, as shown in Fig. 6. A width t is preferably 0 micrometers or more and 25 micrometers or less (the width of the gap in the diagram is exaggerated).

To determine grease suitable for being enclosed within the constant velocity universal joint of the present invention, grease having various friction coefficients µ were enclosed within the constant velocity universal joint, and durability tests were performed. The friction coefficient of the grease is measured using a Savan-type friction wear tester prescribed by JIS. Here, as shown in Fig. 7, the Savan-type friction wear tester is that in which a 1/4 inch steel ball 12 is pressed against a 40ø×4mm rotation ring 11. When the friction coefficient is measured, the rotation ring 11 is rotated at a circumferential speed of 108m/min. A load of 12.7N (1.3kgf) is applied. Grease is supplied to a front surface of the rotation ring 11 via a sponge 13 from a lower end of the rotation ring 11. Movement of an airslide 14 supporting the steel ball 12 is detected by a load cell 15, and the friction coefficient is measured. Friction coefficient measurement was performed 10 minutes after the start of the tests.

The durability tests were performed using a BJ having ball tracks with an offset angle ø_{T} of 13.0°, under a load torque of 834N·m (85kgf·m), a rotation frequency of 230rpm, and an operating angle of 6°. Test results are shown in Table 3.

**[Table 3]**

| Friction Coeflicient µ | ThickeningAgent | Durability |
|---|---|---|
| 0.119 | Li-type | × |
| 0.098 | Li-type | Δ |
| 0.079 | Urea-type | Δ |
| 0.070 | Urea-type | ○ |
| 0.056 | Urea-type | ○ |

It is determined, from Table 3, that grease having a friction coefficient µ of 0.070 or less, particularly that of which the thickening agent is a urea-type, can improve abrasion resistance and improve durability of the constant velocity universal joint.

Among constituent elements of the constant velocity universal joint, when a protective layer is provided on a front surface section at which sliding friction occurs with a partner component, operability of the constant velocity universal joint can be improved. As the front surface section on which the protective layer is formed, a front surface section of the cage 5 that comes into sliding contact with the outer component 2 and the inner component 3 can be given as an example. As the protective layer, a film effective in preventing or suppressing metallic contact between base materials, for example, a chemical conversion film, such as iron sulfide, or an absorbent film, such as molybdenum disulfide, can be considered. In this case, not only can any one of the films (for example, the chemical conversion film such as iron sulfide) be formed on the front surface section, but a composite film (the chemical conversion film such as iron sulfide + the absorbent film such as molybdenum disulfide) can be formed as well.

Table 4 shows a comparison of the effect on cross operation the presence of the protective layer has. The Comparative Example retains the grinding texture. In the Invention, the grinding texture is coated with molybdenum disulfide. As is made clear from Table 4, when the protective layer is formed, operability of the constant velocity universal joint can be improved. The test joints for both the Comparative Example and the Invention are BJ with an offset angle ø_{T} of 12.0°.

**[Table 4]**

| | Cross operation |
|---|---|
| Comparative Example: not coated | ○ |
| Invention: coated | ⊚ |

### ADVANTAGE OF THE INVENTION

The constant velocity universal joint of the present invention has higher strength than a conventional product. Therefore, load capacity can be improved. In addition, the constant velocity universal joint has superior durability and can have a longer life. Moreover, the constant velocity universal joint has excellent durability and provides a stable torque transmitting function regardless of operating angle. These effects can be actualized without increasing the size of the constant velocity universal joint.

### BRIEF DESCRIPTION OF THE DRAWINGS

Fig. 1 is an enlarged cross-sectional view of a constant velocity universal joint (BJ);
Fig. 2 is a vertical cross-sectional view of the constant velocity universal joint (BJ), showing a cross-section taken along A-O-A in Fig. 3;
Fig. 3 is a horizontal cross-sectional view of the constant velocity universal joint;
Fig. 4 is a diagram of test results;
Fig. 5 is a diagram of test results;
Fig. 6 is an enlarged planar view of a cage;
Fig. 7 is a cross-sectional view of a Savan-type friction wear tester; and
Fig. 8 is a vertical cross-sectional view of a constant velocity universal joint (UJ), showing a cross-section taken along B-O-B in Fig. 3.

### BEST MODE FOR CARRYING OUT THE INVENTION

An embodiment of the present invention will be hereinafter described in detail with reference to the accompanying drawings.

As shown in Fig. 1 to Fig. 3, a constant velocity universal joint 1 according to the embodiment includes an outer component 2 (outer member), an inner component 3 (inner member), a plurality of (ordinarily six) torque transmitting balls 4, and a cage 5. In the outer component 2, a plurality of (ordinarily six) curved guiding grooves 2b are formed on a spherical inner circumferential surface 2a in an axial direction. In the inner component 3, a plurality of (ordinarily six) curved guiding grooves 3b are formed on a spherical outer circumferential surface 3a in the axial direction. Each of the torque transmitting balls 4 are disposed on a ball track formed by a guiding groove 2b of the outer component 2 and a guiding groove 3b of the inner component 3 working in cooperation. The cage 5 holds the torque transmitting balls 4.

A center O_{T0} of the guiding groove 2b of the outer component 2 and a center O_{T1} of the guiding groove 3b of the inner component 3 are offset in the axial direction by equal distances in opposite directions from a joint center O (the center O_{T0} to an opening side of the joint, and the center O_{T1} to a back section side of the joint). Therefore, the ball track has a shape (wedge shape) that is wide on the opening side and gradually narrows towards the back section side.

A spherical surface center of an outer circumferential surface 5a of the cage 5 and a spherical surface center of the inner circumferential surface 2a of the outer component 2 serving as a guiding surface of the outer circumferential surface 5a are both aligned with the joint center O. A spherical surface center of an inner circumferential surface 5b of the cage 5 and a spherical surface center of the outer circumferential surface 3a of the inner component 3 serving as a guiding surface of the inner circumferential surface 5b are both aligned with the joint center O. When the outer component 2 and the inner component 3 are angular-displaced by an angle θ, the torque transmitting balls 4 guided by the cage 5 is always maintained within a bisecting surface (θ/2) of the angle θ, at any operating angle θ. Constant velocity of the joint ensured.

As shown in Fig. 1, an offset angle ø_{T} formed by the center of curvature O_{T0} of the guiding groove 2b of the outer component 2, an intersecting point Q between a joint plane P and a PCD, and the center of curvature O_{T1} of the guiding groove 3b of the inner component 3 is set to 11.0° to 15.0°. The offset angle ø_{T} is smaller than an offset angle (about 16.0°) of a conventional product. Therefore, the depths of the guiding grooves 2b and 3b are closer to being equal in the axial direction than in the conventional product (the conventional product is indicated by dashed lines). In this case, areas in which the guiding grooves are shallow have a groove depth that is deeper than that of the conventional product. Therefore, a contact ellipse does not easily ride upwards onto a guiding groove shoulder section even under a high load. Chipping of the shoulder section and the like can be prevented. Increased strength and improved durability of the guiding grooves can be achieved. Moreover, because a thickness of the cage 5 can be thickened, increased strength and increased life of the cage can be achieved. Furthermore, as described above, as long as the offset angle ø_{T} is within the range, operability can be favorably maintained.

The outer component 2 and the inner component 3 are ordinarily heat-treated, such as by high frequency quenching, after cold-forging. Grinding is further performed, and the outer component 2 and the inner component 3 are finished having predetermined dimensions. In the present invention, the durability of the cage 5 improves in relation to the offset angle ø_{T} being smaller than that of the conventional product as described above. Therefore, even when a grinding process performed on the inner circumferential surface 2a of the outer component 2 is omitted, in practice, sufficient durability life can be ensured. From a similar perspective, grinding of the guiding grooves 2b on the outer component 2 can also be omitted. In some cases, grinding of both the inner circumferential surface 2a and the guiding grooves 2b can be omitted.

In addition, because force (axial force) by which the torque transmitting balls 4 try to fly outward towards the joint opening side is weaker than that of the conventional product, slapping sounds generated as a result of the axial force of the torque transmitting balls 4 are prevented or suppressed. Therefore, interference between pockets 51 and the torque transmitting balls 4 can be a positive gap of 0 to 25 micrometers. Heat generation and wear of the cage 5 can be prevented and durability can be further improved. Moreover, bending resistance of the constant velocity universal joint can be reduced, improving facilitation of assembly.

A protective layer made from a chemical conversion film, such as iron sulfide, or an absorbent film, such as molybdenum disulfide, is formed on the outer circumferential surface 5a and the inner circumferential surface 5b of the cage 5 to prevent or suppress metallic contact with the outer component 2 and the inner component 3. The protective layer is merely required to be interposed between two components between which relative sliding contact is made. Other than being formed on the cage 5 side, the protective layer can be formed on the outer component 2 side and the inner component 3 side. In other words, the protective layer can be formed on the inner circumferential surface 2a of the outer component 2 and the outer circumferential surface 3a of the inner component 3. The protective layer can also be formed on both the cage 5 side, and the outer component 2 side and the inner component 3 side.

Grease having a friction coefficient µ of 0.070 or less, measured using a Savan-type friction wear tester, is enclosed within the constant velocity universal joint.

Fig. 8 shows an embodiment in which the present invention is applied to an undercut-free joint (UJ). The center O_{T0} of the guiding groove 2b of the outer component 2 and the center O_{T1} of the guiding groove 3b of the inner component 3 are offset in the axial direction by equal distances in opposite directions from the joint center O (the center O_{T0} to the opening side of the joint, and the center O_{T1} to the back section side of the joint). In addition, a spherical surface center O_{C0} of the outer circumferential surface 5a of the cage 5 (same as the spherical surface center of the inner circumferential surface 2a of the outer component 2) and a spherical surface center O_{C1} of the inner circumferential surface 5b of the cage 5 (same as the spherical surface center of the outer circumferential surface of the inner component 3) are offset in the axial direction by equal distances in opposite directions from the joint center O (the center O_{C0} to the opening side of the joint, and the center O_{C1} to the back section side of the joint). The amount of offset of the outer circumferential surface 5a and the inner circumferential surface 5b of the cage 5 is less than the offset amount of the guiding grooves 2b and 3b.

Straight sections 2b₁ and 3b₁, each having a linear groove bottom when viewed from a vertical cross-section, are formed in an area U₀ of the guiding grooves 2b on the outer component 2 and an area U₁ of the guiding grooves 3b on the inner component 3. The straight section 2b₁ of the outer component 2 is formed on one end side of the guiding grooves 2b (an end section on the opening side of the joint). The straight section 3b₁ of the inner component 3 is formed on the other end side of the guiding grooves 3b (an end section on the back section side of the joint).

Each configuration of the present invention can be applied to the UJ as well, in manner similar to the BJ in Fig. 1 to Fig. 3. In this case, specific configurations are shared, aside from the above-described differences. Therefore, redundant explanations are omitted.

## Claims

1. A fixed constant velocity universal joint including an outer component in which a plurality of guiding grooves extending in an axial direction are provided on a spherical inner circumferential surface, an inner component in which a plurality of guiding grooves extending in the axial direction are provided on a spherical outer circumferential surface, torque transmitting balls that are disposed on ball tracks formed by the guiding grooves on the outer component and the guiding grooves on the inner component forming pairs, and a cage that is guided by the spherical inner circumferential surface of the outer component and the spherical outer circumferential surface of the inner component and holds the torque transmitting balls, in which a center of curvature of a guiding grooves on the outer component and a center of curvature of a guiding groove on the inner component are offset in the axial direction in opposite directions from a joint center, the fixed constant velocity universal joint, wherein an offset angle of a ball track is 11.0° to 15.0°.

2. A fixed constant velocity universal joint including an outer component in which a plurality of guiding grooves extending in an axial direction are provided on a spherical inner circumferential surface, an inner component in which a plurality of guiding grooves extending in the axial direction are provided on a spherical outer circumferential surface, torque transmitting balls that are disposed on ball tracks formed by the guiding grooves on the outer component and the guiding grooves on the inner component forming pairs, and a cage that is guided by the spherical inner circumferential surface of the outer component and the spherical outer circumferential surface of the inner component and holds the torque transmitting balls, in which a center of curvature of a guiding grooves on the outer component and a center of curvature of a guiding groove on the inner component are offset in the axial direction in opposite directions from a joint center, spherical centers of an outer circumferential surface and an inner circumferential surface of the cage are respectively offset in the axial direction in opposite directions from the joint center, and a straight section having a linear groove bottom is provided on each guiding groove on the outer component and the inner component, the fixed constant velocity universal joint, wherein an offset angle of a ball track is 11.0° to 15.0°.

3. The constant velocity universal joint according to claim 2, wherein an offset angle of the cage is greater than 0° and less than 3.0°.

4. The constant velocity universal joint according to claim 1 or 2, wherein, among the spherical inner circumferential surface and the guiding grooves of the outer component, at least one has a forged surface.

5. The constant velocity universal joint according to claim 1 or 2, wherein, in the cage, an interference between a pocket housing a torque transmitting ball and the torque transmitting ball is a positive gap.

6. The constant velocity universal joint according to claim 5, wherein the positive gap is 0 to 25 micrometers.

7. The constant velocity universal joint according to claim 1 or 2, wherein grease having a friction coefficient of 0.070 or less is enclosed within.

8. The constant velocity universal joint according to claim 1 or 2, wherein, among constituent elements of the constant velocity universal joint, a protective layer is formed on a front surface section at which sliding friction occurs with a partner side component.
